# EUROPEAN PATENT SPECIFICATION

(11) **EP 0 352 386 B1**
(45) Date of publication and mention of the grant of the patent: **13.01.1993**
(21) Application number: 88307039.3
(22) Date of filing: 29.07.1988
(51) Int. Cl.: B60Q 7/00, E01F 9/01

(54) **Foldable warning distress sign**
Zusammenklappbares Notwarnzeichen
Indicateur de signalisation de détresse pliable

(43) Date of publication of application: 31.01.1990
(73) Proprietor: Wang, Jiann-Hwa, Yung Ho Taipei Hsien (TW)
(72) Inventor: Wang, Jiann-Hwa, Yung Ho Taipei Hsien (TW)
(74) Representative: Thomson, Roger Bruce

(56) References cited:
- CH-A- 338 737
- DE-A- 2 845 543
- DE-B- 1 136 250
- DE-B- 1 152 644
- GB-A- 961 401

## Description

This invention relates to a foldable warning sign of pyramid shape, which may fold and unfold automatically or manually.

In order to warn passing vehicles and to alert pedestrians to danger, a warning sign may be placed at a spot behind a broken-down vehicle or a workman working on the road. Conventional warning signs usually have a single display face and are supported by means of a cross support. Therefore, it is relatively easy for vehicles approaching from one direction to see the sign, but it is not easy for vehicles coming from other directions to see it or for people working at the corner of a road to see the sign. Also, because such signs generally have just one face and are not designed to rotate, they are subject to the action of wind forces which can tip them over, thus negating their warning function. Thus, the conventional warning signs do not sufficiently protect drivers of broken-down vehicles, people working on the road and other passing vehicles.

Another drawback of the conventional single-face warning sign is that one cannot fold it away or it is at least difficult to fold away. Such warning signs which cannot be folded, although low in cost and convenient to use, require a large amount of storage space when they are not in use, and therefore they are not suitable for transportation in a vehicle. The known foldable single-face warning signs are easy to place in position, but they have to be turned by hand so that the display face is in the right direction and they are not easy to fold and unfold. It takes a considerable amount of time and is inconvenient to operate them and, furthermore, the pivotal joint at the top of the pyramid of such signs is apt to work loose after a period of use so that the sign cannot thereafter be unfolded or maintained in its standing position.

One known collapsible warning sign is described in GB-A-961401. This shows a warning sign comprising a pyramid-shaped sheet cover with a warning sign on each face of the pyramid, a centre shaft, a plurality of rigid ribs which form a frame structure to support the sheet cover, a slide member on the centre shaft which controls the folding and unfolding of the sign, and spring means providing an axial thrust for the slide member for the unfolding of the sign.

It is an object of the present invention to provide an improved collapsible warning sign, preferably a stereoscopic sign, which is particularly suitable for use at crossroads, which can be operated easily, which is able automatically to unfold and fold, and which additionally is of small volume and short length when folded. Because, when folded, the sign is of small volume and is short in length it can conveniently be fitted inside a vehicle or be put in a motorcycle pannier for storage until needed. Also, by virtue of the construction of the sign it is more resistant than conventional signs to being tilted over by strong winds.

In accordance with the present invention there is provided a collapsible warning sign comprising a pyramid-shaped sheet cover with a warning sign on each face of the pyramid; a centre shaft; a plurality of rigid ribs which form a frame structure to support the sheet cover; a slide member on the centre shaft which controls the folding and unfolding of the sign; and spring means providing an axial thrust for the slide member for the unfolding of the sign; characterised in that the sign comprises a base, the centre shaft comprises an upper shaft portion which is retractable into a lower shaft portion which is carried by and which is rotatable relative to the base, the frame structure includes a plurality of resilient ribs outwardly of the rigid ribs and supporting the sheet cover and a plurality of support rods for supporting the resilient ribs, and a spring latch is provided acting on the slide member to maintain the sign normally in the folded state.

In one preferred embodiment of the invention the bottom of the base is provided with a layer of magnetic material. This means that the sign can be placed directly on top of a vehicle or, alternatively, on the road behind a vehicle.

Preferably, the slide member and the upper shaft portion are conjoined by a pin for joint movement.

In a preferred arrangement, each rigid rib has its ends pivotally connected respectively to the slide member and to a connector member into which one end of the associated resilient rib is fixedly inserted, and each support rod has its ends connected respectively to a retaining member at the upper end of the lower shaft portion and pivotally to the outer end of the associated rigid rib.

The upper end of the centre shaft may be provided with a headpiece which secures the sheet cover to the centre shaft. The headpiece may be transparent and fitted with a light bulb which is designed to flash to give a visual warning.

The lower shaft portion is rotatable in the base and the angle of inclination of the faces of the sheet cover are such that the rotatable pyramidal sign will rotate to offset wind pressure and thus prevent the sign from being blown over by strong winds.

Further objects and advantages of the invention will be apparent from the following detailed description, taken in conjunction with the accompanying drawings, in which:
Fig. 1 is a sectional view through an embodiment of collapsible sign in accordance with the invention;
Fig. 2 is an external perspective view of the sign;

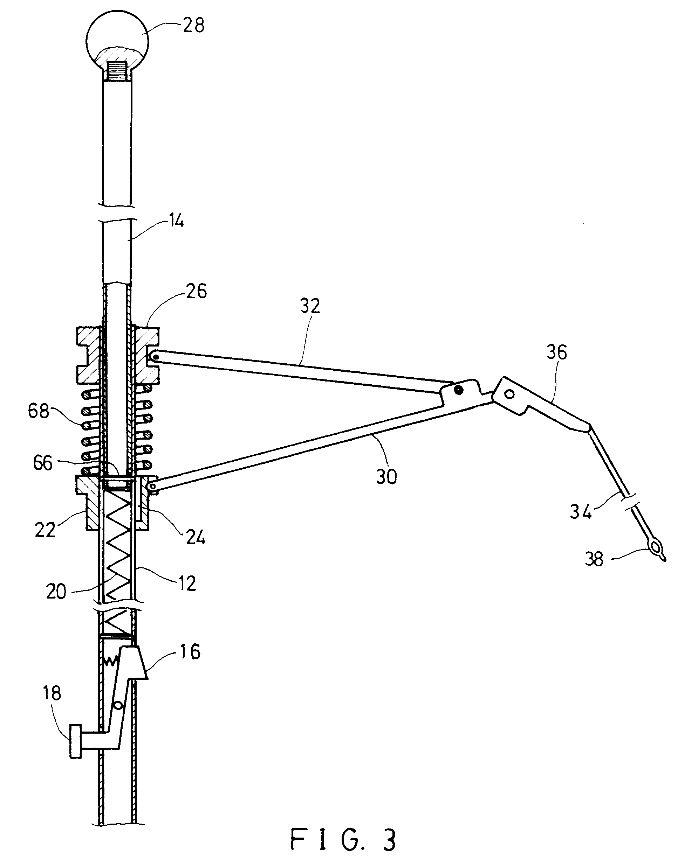

Fig. 3 is a sectional view, on an enlarged scale, of part of the sign in the unfolded state, with the canvas sheet cover and base omitted;
Fig. 4 is a sectional view, on an enlarged scale, of part of the sign, in the closed state, with the base omitted; and
Fig. 5 is a part-sectional view, on an enlarged scale, of the top of the centre shaft of the sign, the top being made of transparent material and having a flashing bulb set therein.

The drawings show a stereoscopic collapsible warning sign in accordance with the invention which has a variety of applications in use. The sign is indicated generally by the reference numeral 10.

The warning sign has a plurality of resilient ribs 34 coupled to a centre shaft which comprises an upper shaft 14 and a lower shaft 12, the resilient ribs forming a frame structure to support a canvas sheet cover 50. Each resilient rib 34 is supported by means of a set of rigid ribs 30 and supporting rods 32.

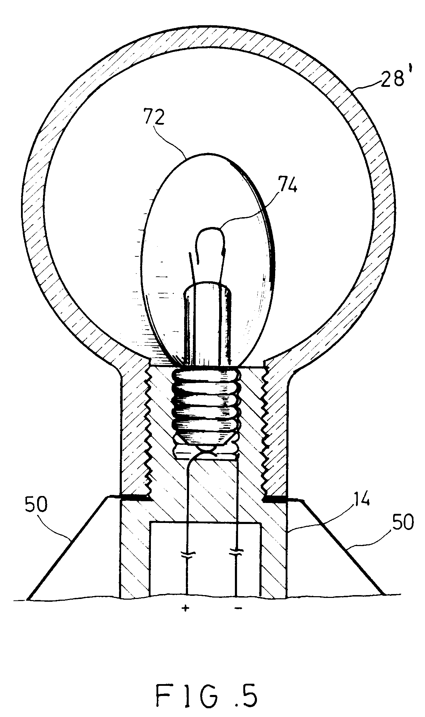

The shaft located at the centre of the sign is made up from the upper shaft 14 which is flexible and from the lower shaft 12. The upper shaft 14 is displaceable into the lower shaft 12 in order to shorten the overall length of the shaft. The top of the upper shaft 14 is fitted with a generally spherical head 28, 28' which, as shown most clearly in Fig. 5, is screwed down on to the upper shaft 14 to wedge the upper margin of the canvas sheet cover 50 therebetween. A fixed runner 26 is fitted to the top end of the lower shaft 12. The bottom end of the lower shaft 12 is inserted in a circular base 60 with a bearing 64 being provided at the junction between the lower shaft 12 and the base 60 to permit the lower shaft to rotate freely relative to the base.

A slide piece 22 is provided on the lower shaft 12 to be axially displaceable relative to the shaft. The slide piece 22 is connected to the bottom end of the upper shaft 14 by means of a pin 66 which extends transversely through the upper shaft, so that the slide piece 22 and the upper shaft 14 can move axially in synchronism.

The frame structure comprising the resilient ribs 34, the rigid ribs 30 and the supporting rods 32 supports the canvas sheet cover 50. The two ends of each rigid rib 30 are pivotally connected respectively to the slide piece 22 on the lower shaft 12 and to a connector 36 which is fixed to the upper end of the associated resilient rib 34. The inner end of each supporting rod 32 is pivotally connected to the fixed runner 26. The outer end of each supporting rod 32 is pivotally connected to the outer end of the associated rigid rib 30. The upper end of each resilient rib 34 is inserted into the connector 36, and the lower, outer end 38 of each resilient rib 34 is connected by a tie to the canvas sheet cover 50.

The slide piece 22 and the upper shaft 14, when they are pushed upwards to a position near the top of the lower shaft 12, cause the rigid ribs 30, the supporting rods 32 and the resilient ribs 34 to unfold to form a frame structure which supports the canvas sheet cover 50 in a pyramidal shape. Each of the faces of the pyramidal sheet cover 50 has a triangular warning sign 52 painted thereon, for example in fluorescent lacquer or in a light-reflective material which will be visible in the dark. A buffer spring 68 is seated below the fixed runner 26 and is seated at its other end against the slide piece 22. This spring has a braking and buffering action.

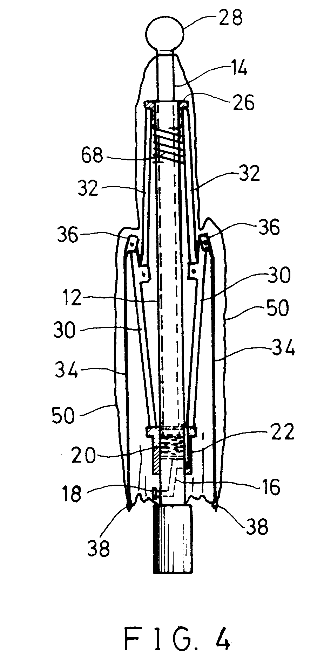

The slide piece 22 and the upper shaft 14, when pulled downwards to a position such as is shown in Fig. 4 where the slide piece 22 is adjacent to the bottom end of the lower shaft 12, cause the rigid ribs 30, the supporting rods 32 and the resilient ribs 34 to fold inwards into close proximity with the centre shaft. In this movement the upper shaft 14 is retracted into the lower shaft 12, the canvas sheet cover folds up into three folded panels, and the rigid ribs 30, the resilient ribs 34 and the supporting rods 32 close inwards. When closed, the volume of the collapsible sign is reduced and its length is shorter than when the sign 10 is unfolded. This means that it is then very easy for the collapsible sign to be placed in a small case at the front seat of a vehicle or in the boot of a vehicle or in a pannier of a motorcycle.

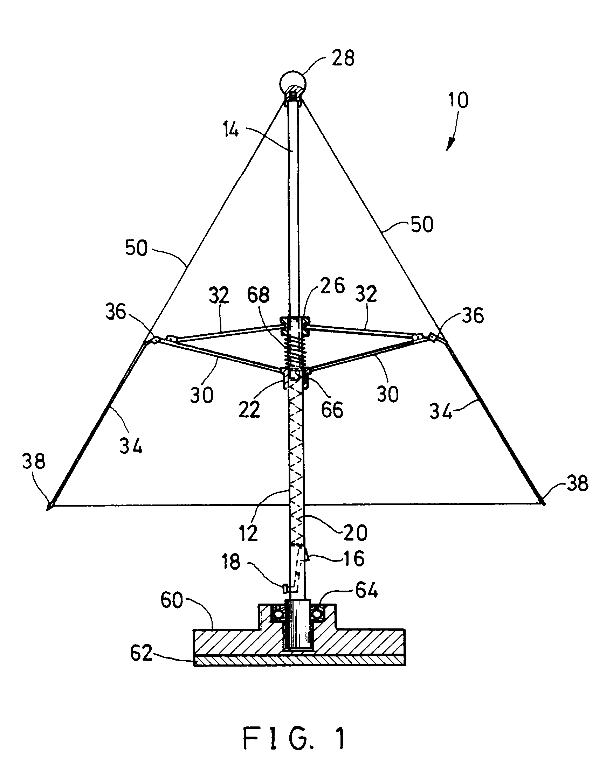

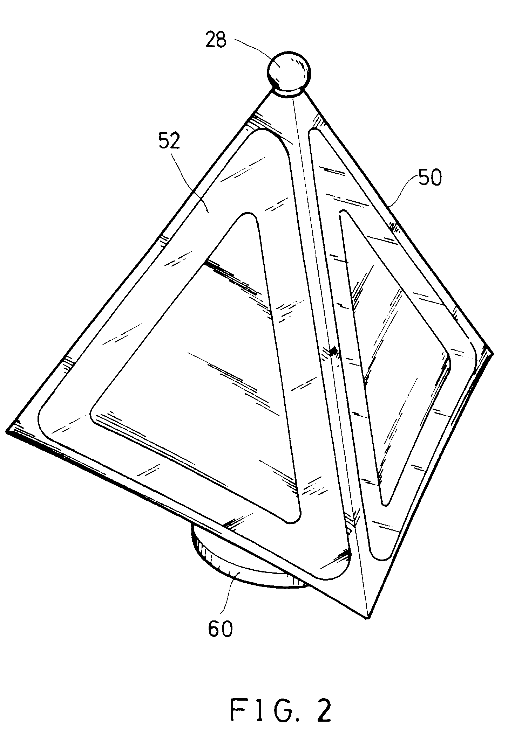

The slide piece 22 has an inner slot 24 which is engageable with a spring-biassed latch 16 in order to retain the collapsible sign 10 in its collapsed state, as shown in Fig. 4. Simultaneously, a spring 20 which is located within the lower shaft 12 is compressed by the force of the upper shaft 14 being displaced downwards. The compressed spring 20 provides at any time, as required, an upward biassing force which will cause the slide piece 22 and the upper shaft 14 to return to a dead point when the slide piece 22 is released from the latch 16. With the latch engaged, the thrust of the spring is held in check. Therefore, with the sign 10 in the closed or collapsed state, if the user presses a release button 18 to free the latch 16 which holds the slide piece 22, then the internal spring 20 will immediately force the slide piece 22 and upper shaft 14 upwards to the dead point so that the sign is automatically unfolded as shown in Figs. 1 and 2.

The underside of the circular base 60 which supports the centre shaft and which is itself freely rotatable is covered with a layer 62 of magnetic material so that the collapsible sign 10 can be positioned on the roof of a vehicle if the vehicle breaks down. This may be desirable for example if the vehicle has to travel slowly due to overheating or a puncture. The stereoscopic warning sign 10 mounted on top of the vehicle differs considerably from any other warning device which is conventionally provided on a vehicle, such as the provision of two amber warning flashers or a multi-function third brake light, etc. The warning provided by the warning sign of the present invention, when positioned on top of the vehicle, is much more effective than conventional warning devices and is visible to vehicles approaching from behind as well as to vehicles approaching from in front, as well as to vehicles which may be travelling in different lanes which could not normally see conventional amber warning flashing lights. As shown in Fig. 5, in order to increase the warning effect of the sign 10, the head 28' on top of the centre shaft can be made of a transparent material and within the head 28' is fitted a flashing bulb 72 which has a bimetallic connector 74. The flashing bulb 72 can be powered from a socket on the dashboard of the vehicle or from a battery contained within the sign itself. For operational convenience, or for a more permanent mounting of the warning sign on top of the vehicle, the circular base of the sign is removed and the centre shaft, resilient ribs, rigid ribs, supporting rods and canvas sheet cover are housed within a fixed sleeve on top of the vehicle. The centre shaft is driven so as to be extended and retracted, by a stepping motor or by a drive motor in order to achieve an automatic unfolding and folding of the stereoscopic warning sign. A control switch for operation of the motor can be directly operated by the driver.

When fitted with its base 60 the warning sign 10 can also be placed on the road at a distance behind a broken-down vehicle in order to warn approaching vehicles of the hazard.

The supported pyramidal canvas sheet cover 50 is set at an appropriate angle of inclination to the ground when the sign is unfolded, and the central shaft comprising the lower shaft 12 and the upper shaft 14 is able freely to rotate, so that when any face or every face of the cover is blown by a strong wind or is subjected to some other unbalancing force, the warning sign 10 will rotate on the base 60 in order to absorb the wind pressure and make the sign immune from being tipped over. Also, the rotation of the sign under such conditions enhances the warning effect of the warning triangles 52 on the faces of the cover.

The stereoscopic warning sign 10 of the present invention thus can provide a warning both for vehicles and pedestrians coming from any direction, as well as an automatically operating folding and unfolding mechanism, and because it is easily portable is especially suitable for use by owners of vehicles and motorcyclists, as well as by workmen working on a road.

## Claims

1. A collapsible warning sign comprising a pyramid-shaped sheet cover (50) with a warning sign (52) on each face of the pyramid; a centre shaft (12,14); a plurality of rigid ribs (30) which form a frame structure to support the sheet cover; a slide member (22) on the centre shaft which controls the folding and unfolding of the sign; and spring means (20) providing an axial thrust for the slide member (22) for the unfolding of the sign; characterised in that the sign comprises a base (60), the centre shaft comprises an upper shaft portion (14) which is retractable into a lower shaft portion (12) which is carried by and rotatable relative to the base (60), the frame structure includes a plurality of resilient ribs (34) outwardly of the rigid ribs (30) and supporting the sheet cover and a plurality of support rods (32) for supporting the resilient ribs (34), and a spring latch (16) is provided acting on the slide member (22) to maintain the sign normally in the folded state.

2. A collapsible warning sign according to claim 1, characterised in that the slide member (22) and the upper shaft portion (14) are conjoined by a pin (66) for joint movement.

3. A collapsible warning sign according to claim 1 or 2, characterised in that each rigid rib (30) has its ends pivotally connected respectively to the slide member (22) and to a connector member (36) into which one end of the associated resilient rib (34) is fixedly inserted, and each support rod (32) has its ends connected respectively to a retaining member (26) at the upper end of the lower shaft portion (12) and pivotally to the outer end of the associated rigid rib (30).

4. A collapsible warning sign according to claim 1, 2 or 3, characterised in that the bottom of the base (60) is provided with a layer (62) of magnetic material.

5. A collapsible warning sign according to any preceding claim, characterised in that the upper end of the centre shaft is provided with a head piece (28') which secures the sheet cover (50) to the centre shaft (14).

6. A collapsible warning sign according to claim 5, characterised in that the head piece (28') is transparent and a light bulb (72) is set therein.

## Patentansprüche

1. Zusammenklappbares Notwarnzeichen mit einem auf jeder seiner Seiten ein Warnzeichen (52) enthaltenden, pyramidenartig geformten Beplanung (50), einem Zentralschaft (12,14), einer Mehrzahl von steifen Rippen (30), die eine die Beplanung tragendes Rahmengestell bilden, einem auf dem Zentralschaft vorhandenen, das Zusammenfalten und Entfalten des Notwarnzeichens steuernden Gleitmittel (22) und mit Federmitteln (20), die auf das Gleitmittel einen Axialdruck zum Entfalten des Notwarnzeichens ausüben, **dadurch gekennzeichnet,** daß das Notwarnzeichen einen Sockel (60) besitzt, sein Zentralschaft einen oberen Schaftteil (14) aufweist, der in einen unteren Schaftteil (12) einschiebbar ist, der auf dem Sockel (60) drehbeweglich dazu abgestützt ist, und daß das Rahmengestell eine Mehrzahl von außerhalb der steifen Rippen (30) liegenden, die Beplanung abstützenden, biegsamen Rippen (34), sowie weiterhin eine Mehrzahl von die biegsamen Rippen (34) tragenden Stützstangen (32) aufweist, und daß schließlich eine federbelastete Klinke (16) vorhanden ist, die das Gleitmittel (22) in einer das Notwarnzeichen normalerweise im zusammengefalteten Zustand haltenden Lage zu arretieren erlaubt.

2. Zusammenklappbares Notwarnzeichen nach Anspruch 1, **dadurch gekennzeichnet,** daß das Gleitmittel (22) und der obere Schaftteil (14) über einen Bolzen (66) für gemeinsame Bewegung miteinander verbunden sind.

3. Zusammenklappbares Notwarnzeichen nach Anspruch 1 oder 2, **dadurch gekennzeichnet,** daß jede steife Rippe (30) über ihre Enden gelenkig einerseits mit dem Gleitmittel (22) und andererseits mit einem Verbindungsglied (36) verbunden ist, in welchem das eine Ende der zugehörigen biegsamen Rippe (34) fest eingesetzt ist, und wobei jede Stützstange (32) mit ihren Enden einerseits mit einem am oberen Ende des unteren Schaftteiles (12) vorhandenen Stützglied (26) und mit dem äußeren Ende der zugehörigen steifen Rippe (30) gelenkig verbunden ist.

4. Zusammenklappbares Notwarnzeichen nach Anspruch 1,2 oder 3, **dadurch gekennzeichnet,** daß der Boden des Sockels (60) mit einer Schicht (62) aus magnetischem Material versehen ist.

5. Zusammenklappbares Notwarnzeichen nach einem vorhergehenden Anspruch, **dadurch gekennzeichnet,** daß das obere Ende des Zentralschaftes mit einem Kopfstück (28') versehen ist, das die Beplanung (50) mit dem Zentralschaft (14) verbindet.

6. Zusammenklappbares Notwarnzeichen nach Anspruch 5, **dadurch gekennzeichnet,** daß das Kopfstück (28') transparent ist und darin eine Glühbirne vorhanden ist.

## Revendications

1. Signal d'avertissement repliable comportant une enveloppe (50) en feuille en forme de pyramide ayant un signal d'avertissement (52) sur chaque face de la pyramide; un arbre central (12, 14); plusieurs barres rigides (30) qui forment une structure de bâti pour supporter l'enveloppe en feuille; un élément coulissant (22) situé sur l'arbre central, qui commande le pliage et le dépliage du signal; et un moyen à ressort (20) exerçant une poussée axiale pour l'élément coulissant (22) afin de déplier le signal; caractérisé en ce que le signal comporte une embase (60), l'arbre central comporte un tronçon d'arbre supérieur (14) qui peut être rétracté dans un tronçon d'arbre inférieur (12) qui est porté par l'embase (60) et qui peut tourner par rapport à celle-ci, la structure de bâti comprend plusieurs barres élastiques (34) vers l'extérieur des barres rigides (30) et supportant l'enveloppe en feuille et plusieurs tiges (32) de support destinées à supporter les barres élastiques (34), et un verrou à ressort (16) est prévu, lequel agit sur l'élément coulissant (22) pour maintenir le signal normalement dans l'état plié.

2. Signal d'avertissement repliable selon la revendication 1, caractérisé en ce que l'élément coulissant (22) et le tronçon d'arbre supérieur (14) sont reliés entre eux par une goupille (66) pour se déplacer ensemble.

3. Signal d'avertissement repliable selon la revendication 1 ou 2, caractérisé en ce que chaque barre rigide (30) est articulée par ses extrémités, respectivement, sur l'élément coulissant (22) et sur un élément de liaison (36) dans lequel une extrémité de la barre élastique associée (34) est insérée de façon fixe, et chaque tige (32) de support est reliée par ses extrémités, respectivement, à un élément de retenue (26) à l'extrémité supérieure du tronçon d'arbre inférieur (12) et de façon pivotante à l'extrémité extérieure de la barre rigide associée (30).

4. Signal d'avertissement repliable selon la revendication 1, 2 ou 3, caractérisé en ce que le dessous de l'embase (60) est pourvu d'une couche (62) de matière magnétique.

5. Signal d'avertissement repliable selon l'une quelconque des revendications précédentes, caractérisé en ce que l'extrémité supérieure de l'arbre central est pourvue d'une piéce de tête (28') qui fixe l'enveloppe (50) en feuille à l'arbre central (14).

6. Signal d'avertissement repliable selon la revendication 5, caractérisé en ce que la pièce de tête (28') est transparente et une ampoule lumineuse (72) est placée à l'intérieur de cette pièce de tête.
